# EUROPÄISCHE PATENTSCHRIFT

(11) **EP 2 853 153 B1**
(45) Veröffentlichungstag und Bekanntmachung des Hinweises auf die Patenterteilung: **20.07.2016**
(21) Anmeldenummer: 14186128.6
(22) Anmeldetag: 24.09.2014
(51) Int. Cl.: A01G 23/087

(54) **SCHNEIDBEFESTIGUNG AN SCHWINGSCHNEIDWERK**
CUTTER MOUNT ON OSCILLATING CUTTER
DISPOSITIF DE FIXATION SUR OUTIL DE COUPE OSCILLANT

(30) Priorität: 26.09.2013 AT 7472013
(43) Veröffentlichungstag der Anmeldung: 01.04.2015
(73) Patentinhaber: Steininger, Werner, 4722 Peuerbach (AT)
(72) Erfinder: Steininger, Werner, 4722 Peuerbach (AT)
(74) Vertreter: KLIMENT & HENHAPEL

(56) Entgegenhaltungen:
- DE-A1- 2 452 817
- FR-A1- 2 970 840
- US-A- 3 797 539
- US-A- 4 274 457
- US-A- 5 044 409

## Beschreibung

Die Erfindung betrifft eine Vorrichtung zum Schneiden von schwerem Schnittgut, insbesondere Bäumen, umfassend einen sichelförmigen Basisteil mit einer Grundfläche, einer Deckfläche, sowie einer konkav verlaufenden Seitenfläche, die einen Aufnahmeraum für abgetrenntes Schnittgut umgrenzt, der von einer Schneidplatte gequert wird, wobei die Schneidplatte an der Grund- oder Deckfläche an der Außenfläche der Grund- oder Deckfläche anliegend über eine erste Schraubenreihe befestigt ist, die einer Randkante der konkav verlaufenden Seitenfläche zumindest abschnittsweise folgt, gemäß dem Oberbegriff von Anspruch 1.

In der Holzindustrie und der Forstwirtschaft werden etwa zum Schneiden von Bäumen große Arbeitsmaschinen eingesetzt, die mit einem Auslegerarm mit Greifvorrichtungen versehen sind, mit deren Hilfe sie Baumstämme umfassen können. Diese Greifvorrichtungen können beispielsweise mit einer Hydraulik versehen sein. Zusätzlich ist ein Schneidwerk vorgesehen, das in Form einer beweglichen Schwinge mit einer daran befestigten Schneidplatte ausgeführt sein kann und es ermöglicht, die erfassten Baumstämme zu durchtrennen. In weiterer Folge kann der Auslegerarm den Baum entweder zur Seite legen oder einer Maschine zur Zerkleinerung oder Weiterverarbeitung zuführen. Vorrichtungen dieser Art werden etwa in den Druckschriften DE 2452817 A1 und US 3797539 A beschrieben.

Herkömmliche Vorrichtungen weisen etwa eine Schwinge auf, die als sichelförmiger Basisteil mit einer Grundfläche, einer Deckfläche, sowie einer konkav verlaufenden Seitenfläche ausgebildet ist, wobei die konkav verlaufende Seitenfläche einen Aufnahmeraum für abgetrenntes Schnittgut umgrenzt. Dieser Aufnahmeraum wird von einer Schneidplatte gequert, die am Basisteil zumeist mittels Schrauben befestigt ist. Die Schneidplatte wird dabei formschlüssig von der konkav verlaufenden Seitenfläche aufgenommen, oder stützt sich zumindest an ihr ab. Hierzu wird die Schneidplatte genau an die konkav geformte Seitenfläche angepasst, um einen guten Formschluss und damit eine gute Kraftübertragung zu gewährleisten. Die Schrauben sind entlang dieses Formschlusses angeordnet.

Eine solche Anordnung ermöglicht eine gute Kraftaufnahme in einer zur Schneidplatte parallelen Richtung, da sich die Schneidplatte in dieser Richtung an der Seitenfläche des Basisteils abstützen kann. Praktische Erfahrungen zeigen jedoch, dass die Schneidplatte vor allem im Bereich zwischen Schneide und den der Schneide nächstliegenden Schrauben leicht einreißt oder bricht. Diese Beschädigungen sind darauf zurückzuführen, dass die Schneidplatte nicht nur durch Kräfte, die parallel zur Schneidplatte wirken, belastet wird, sondern auch durch Kräfte normal zur Schneidplatte, sowie durch Scherkräfte. Die Schneidplatte unterliegt somit auch starker Biegebeanspruchung, die in der Praxis vor allem im Bereich jener Schrauben, die der Schneide am nächsten liegen, zu Beschädigungen führt. Die Schneidplatte und mitunter auch die Befestigungsschrauben müssen daher immer wieder erneuert werden. Des Weiteren ist für ein optimales Zusammenwirken von Formschluss zur Kraftaufnahme und den Schrauben zur Befestigung der Schneidplatte eine genaue Fertigung von Schneidplatte und Basisteil erforderlich, damit die Schneidplatte einerseits spannungsfrei befestigt werden kann und dabei andererseits einen präzisen Formschluss mit der konkav verlaufenden Seitenfläche aufweist, um sich bei Belastung optimal abstützen zu können.

Es ist daher das Ziel der Erfindung diese Nachteile zu vermeiden und die Schwinge solcher Vorrichtungen so zu verbessern, dass die Schneidplatte nicht so leicht einreißt oder bricht und die Schneidplatte daher länger verwendet werden kann. Die erfindungsgemäße Vorrichtung soll dennoch kostengünstiger hergestellt werden können.

Diese Ziele werden durch die Merkmale von Anspruch 1 erreicht. Anspruch 1 bezieht sich auf eine Vorrichtung zum Schneiden von schwerem Schnittgut, insbesondere Bäumen, umfassend einen sichelförmigen Basisteil mit einer Grundfläche, einer Deckfläche, sowie einer konkav verlaufenden Seitenfläche, die einen Aufnahmeraum für abgetrenntes Schnittgut umgrenzt, der von einer Schneidplatte gequert wird, wobei die Schneidplatte an der Grund- oder Deckfläche an der Außenfläche der Grund- oder Deckfläche anliegend über eine erste Schraubenreihe befestigt ist, die einer Randkante der konkav verlaufenden Seitenfläche zumindest abschnittsweise folgt. Erfindungsgemäß ist hierbei vorgesehen, dass zumindest jene Grund- oder Deckfläche, an der die Schneidplatte befestigt ist, eine konvex geformte Außenkontur aufweist, und eine zweite Schraubenreihe zur Befestigung der Schneidplatte vorgesehen ist, die der konvexen Außenkontur zumindest abschnittsweise folgt. Die außenseitige Anordnung der Schneidplatte ermöglicht größere Befestigungsflächen insbesondere im Nahbereich der Schneide, sodass Spannungsspitzen reduziert werden und die Schneidplatte bzw. entsprechende Befestigungsschrauben nicht so leicht einreißen oder brechen. Darüber hinaus ermöglicht die außenseitige Anordnung der Schneidplatte, dass die Schneide mit seiner geforderten Breite näher zur konkav verlaufenden Seitenfläche und somit näher zu den Befestigungsschrauben angeordnet werden kann, wodurch sich Biegemomente verringern und die zur Schneide nächstgelegenen Schrauben entlastet werden.

Des Weiteren muss bei der Auslegung und Fertigung der Schneidplatte nicht mehr auf einen optimalen Formschluss mit der konkav verlaufenden Seitenfläche des Basisteils Rücksicht genommen werden, weshalb die Schwinge kostengünstiger hergestellt werden kann.

Die beiden erfindungsgemäßen Schraubenreihen definieren dabei die Befestigungsfläche, mit der die Schneidplatte am Basisteil befestigt ist. Eine solche Befestigungsfläche verringert lokale Belastungen auf die Schneidplatte sowie die Belastung auf einzelne Schrauben im Vergleich zu herkömmlichen Schwingen, bei denen die Befestigung der Schneidplatte am Basisteil lediglich entlang einer Befestigungslinie erfolgt.

Vorzugsweise schließt die Schneidplatte mit der konvexen Außenkontur bündig ab, wodurch die Gesamtstabilität erhöht wird.

In einer weiteren Ausführungsvariante ist vorgesehen, dass im Endbereich des sichelförmigen Basisteils eine Gewindehülse für zumindest eine der Schrauben der ersten oder zweiten Schraubenreihe am Basisteil angeformt ist, wodurch der Abstand zwischen der Schraubenbohrung und der konvexen Außenkontur geringer gehalten werden kann. Dies ermöglicht es, die Schwinge im Endbereich des sichelförmigen Basisteils schlanker auszuführen, womit die praktische Einsetzbarkeit verbessert wird.

Die Erfindung wird in weiterer Folge anhand von Ausführungsbeispielen mithilfe der beiliegenden Zeichnungen näher erläutert. Hierbei zeigen die
Fig. 1 eine axonometrische Ansicht einer Schwinge gemäß dem Stand der Technik,
Fig. 2 eine Draufsicht auf die Schwinge gemäß dem Stand der Technik nach Fig. 1,
Fig. 3 eine axonometrische Ansicht einer Ausführungsform einer erfindungsgemäßen Schwinge,
Fig. 4 eine Draufsicht der erfindungsgemäßen Schwinge gemäß Fig. 3,
Fig. 5 eine axonometrische Ansicht einer weiteren Ausführungsform einer erfindungsgemäßen Schwinge, und die
Fig. 6 eine Draufsicht der erfindungsgemäßen Schwinge gemäß Fig. 5.

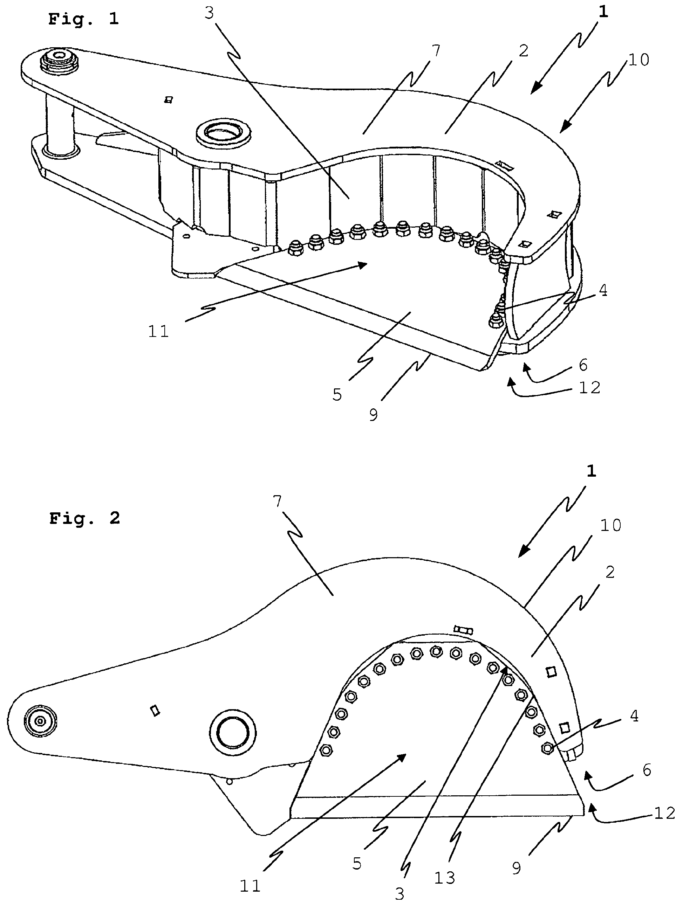

Die Figuren 1 und 2 zeigen eine Schwinge 1 gemäß dem Stand der Technik mit einem sichelförmigen Basisteil 2, dessen konkav verlaufende Seitenfläche 3 einen Aufnahmeraum 11 umgrenzt. Dieser Aufnahmeraum 11 wird von einer Schneidplatte 5 gequert und dient zur Aufnahme von abgetrenntem Schnittgut, beispielsweise eines Baumstammes. Die Schneidplatte 5 weist eine geradlinig ausgebildete Schneide 9 auf, die die Eintrittsöffnung des Aufnahmeraumes 11 für abgetrenntes Schnittgut quert. Die Schneidplatte 5 wird in ihren der Schneide 9 abgewandten Bereichen von der konkav verlaufenden Seitenfläche 3 formschlüssig aufgenommen und stützt sich an ihr ab. Die Befestigung der Schneidplatte 5 erfolgt am Basisteil 2 über Schrauben 4, die an einem flanschartigen Fortsatz des Basisteiles 2 in Form einer Schraubenreihe angeordnet sind. Praktische Erfahrungen zeigen bei einer solchen Ausführung, dass die Schneidplatte 5 vor allem im Bereich zwischen Schneide 9 und den der Schneide 9 nächstliegenden Schrauben 4 leicht einreißt oder bricht. Diese Beschädigungen sind darauf zurückzuführen, dass die Schneidplatte 5 nicht nur durch Kräfte, die parallel zur Schneidplatte 5 wirken, belastet wird, sondern auch durch Kräfte normal zur Schneidplatte 5, sowie durch Scherkräfte. Die Schneidplatte 5 unterliegt somit auch starker Biegebeanspruchung, die in der Praxis vor allem im Bereich jener Schrauben 4, die der Schneide 9 am nächsten liegen, zu Beschädigungen führt.

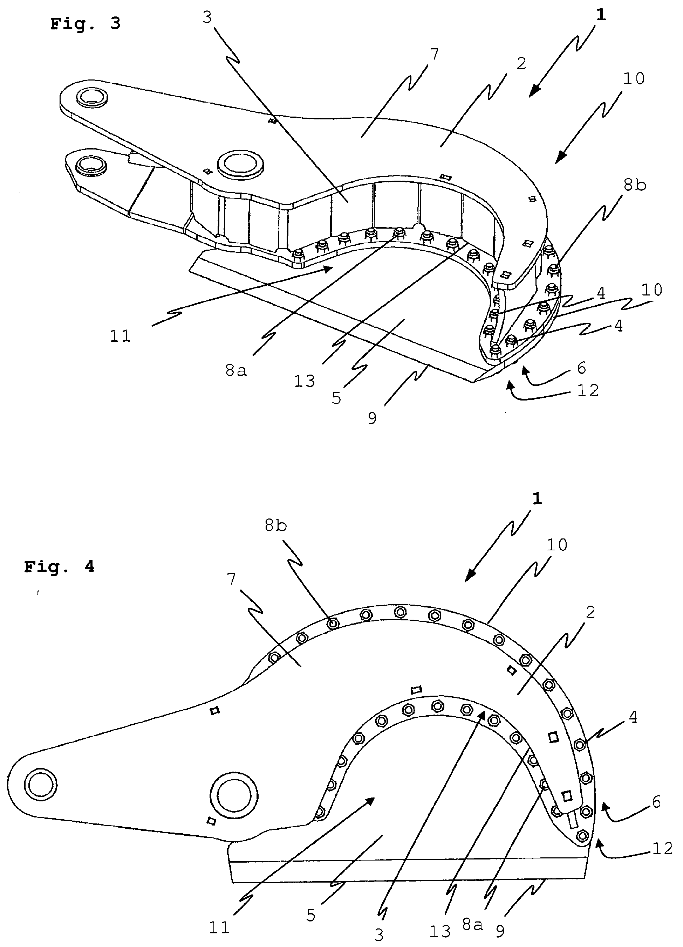

Die Figuren 3 und 4 zeigen im Gegensatz dazu eine Ausführungsvariante einer erfindungsgemäßen Schwinge 1. Die Schwinge 1 umfasst einen sichelförmigen Basisteil 2 mit einer Grundfläche 6, einer Deckfläche 7, sowie einer konkav verlaufenden Seitenfläche 3, die ebenfalls einen Aufnahmeraum 11 umgrenzt. Am Basisteil 2 ist wiederum eine Schneidplatte 5 mithilfe von Schrauben 4 befestigt, wobei die Befestigung der Schneidplatte 5 an einer Außenfläche 12 der Grundfläche 6 über eine erste Schraubenreihe 8a erfolgt, die einer Randkante 13 der konkav geformten Seitenfläche 3 folgt, sowie mittels einer zweiten Schraubenreihe 8b, die einer konvex geformten Außenkontur 10 des Basisteils 2 folgt. Die Schneidplatte 5 ist dabei an der Außenfläche 12 der Grundfläche 6 anliegend befestigt und schließt vorzugsweise bündig mit der konvexen Außenkontur 10 des Basisteils 2 ab.

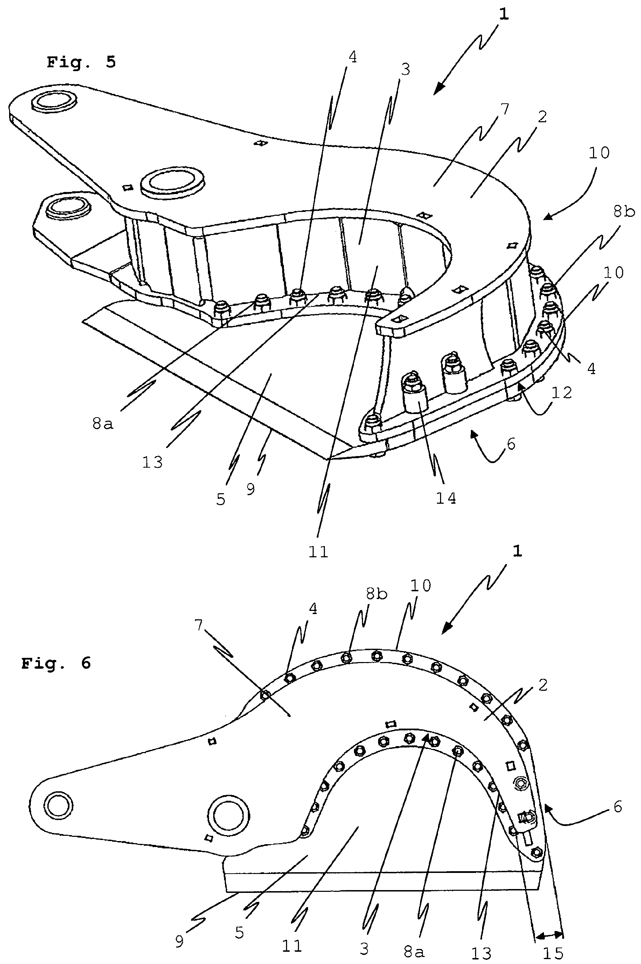

Die Figuren 5 und 6 zeigen eine alternative Ausführungsvariante einer erfindungsgemäßen Schwinge 1, bei der im Endbereich des sichelförmigen Basisteils 2 zwei Gewindehülsen 14 für zwei der Schrauben 4 der zweiten Schraubenreihe 8b am Basisteil 2 angeformt ist. Der Abstand zwischen der betreffenden Schraubenbohrung und der konvexen Außenkontur 10 kann daher geringer gehalten werden, wodurch die Flanschbreite 15 in diesem Bereich reduziert werden kann. Die Schwinge kann somit im Endbereich des sichelförmigen Basisteils 2 schlanker ausgeführt werden, womit die praktische Einsetzbarkeit verbessert wird. Die in den Fig. 3 bis 6 dargestellte Schwinge 1 ist Teil eines Schneidwerks und über eine Aufhängevorrichtung an einer Arbeitsmaschine hydraulisch schwenkbar befestigt.

Die beiden Schraubenreihen 8a, 8b gemäß der Fig. 3 bis 6 definieren somit eine Befestigungsfläche, mit der die Schneidplatte 5 am Basisteil 2 befestigt ist. Eine solche Befestigungsfläche verringert lokale Belastungen auf die Schneiplatte 5 sowie die Belastung auf einzelne Schrauben 4 im Vergleich zu herkömmlichen Schwingen 1 gemäß der Fig. 1 und 2, bei denen die Befestigung der Schneidplatte 5 am Basisteil 2 lediglich entlang einer Befestigungslinie erfolgt.

Mithilfe der erfindungsgemäß vorgesehenen Maßnahmen können Belastungen der Schneidplatte 5 sowie der Schrauben 4 verringert werden, sodass die Schneidplatte 5 mit ihren Schrauben 4 länger verwendet werden kann. Die erfindungsgemäße Vorrichtung ist dennoch kostengünstiger herzustellen, da bei der Auslegung und Fertigung der Schneidplatte 5 nicht mehr auf einen optimalen Formschluss mit der konkav verlaufenden Seitenfläche 3 des Basisteils 2 Rücksicht genommen werden muss.

### BEZUGSZEICHENLISTE

- 1: Schwinge
- 2: Basisteil
- 3: Seitenfläche
- 4: Schraube
- 5: Schneidplatte
- 6: Grundfläche
- 7: Deckfläche
- 8: Schraubenreihe (erste Schraubenreihe 8a, zweite Schraubenreihe 8b)
- 9: Schneide
- 10: konvex geformte Außenkontur
- 11: Aufnahmeraum
- 12: Außenfläche
- 13: Randkante
- 14: Gewindehülse
- 15: Flanschbreite

## Patentansprüche

1. Vorrichtung zum Schneiden von schwerem Schnittgut, insbesondere Bäumen, umfassend einen sichelförmigen Basisteil (2) mit einer Grundfläche (6), einer Deckfläche (7), sowie einer konkav verlaufenden Seitenfläche (3), die einen Aufnahmeraum (11) für abgetrenntes Schnittgut umgrenzt, der von einer Schneidplatte (5) gequert wird, wobei die Schneidplatte (5) an der Grund- (6) oder Deckfläche (7) an der Außenfläche (12) der Grund- oder Deckfläche anliegend über eine erste Schraubenreihe (8a) befestigt ist, die einer Randkante (13) der konkav verlaufenden Seitenfläche (3) zumindest abschnittsweise folgt, **dadurch gekennzeichnet, dass** zumindest jene Grund- (6) oder Deckfläche (7), an der die Schneidplatte (5) befestigt ist, eine konvex geformte Außenkontur (10) aufweist, und eine zweite Schraubenreihe (8b) zur Befestigung der Schneidplatte (5) vorgesehen ist, die der konvexen Außenkontur (10) zumindest abschnittsweise folgt.

2. Vorrichtung nach Anspruch 1, **dadurch gekennzeichnet, dass** die Schneidplatte (5) mit der konvexen Außenkontur (10) bündig abschließt.

3. Vorrichtung nach Anspruch 1 oder 2, **dadurch gekennzeichnet, dass** im Endbereich des sichelförmigen Basisteils (2) eine Gewindehülse (14) für zumindest eine der Schrauben (4) der ersten oder zweiten Schraubenreihe (8a, 8b) am Basisteil (2) angeformt ist.

## Claims

1. An apparatus for cutting heavy cutting material, especially trees, comprising a crescent-shaped base part (2) having a base (6), a top surface (7), and a concavely extending side surface (3) which delimits a receiving space (11) for severed cutting material, said receiving space being crossed by a cutting plate (5), wherein the cutting plate (5) is fixed via a first row of screws (8a) to the base (6) or top surface (7) resting on the exterior surface (12) of the base or top surface, which row of screws follows a peripheral edge (13) of the concavely extending side surface (3) at least in sections, **characterized in that** at least the base (6) or top surface (7) to which the cutting plate (6) is fixed has a convexly formed outer contour (10), and a second row of screws (8b) is provided for fixing the cutting plate (5) which follows the convex outer contour (10) at least in sections.

2. An apparatus according to claim 1, **characterized in that** the cutting plate (5) is flush with the convex outer contour (10).

3. An apparatus according to claim 1 or 2, **characterized in that** in the end region of the crescent-shaped base part (2) a threaded sleeve (14) for at least one of the screws (4) of the first or second row of screws (8a, 8b) is integrally attached to the base part (2).

## Revendications

1. Dispositif pour couper une matière à couper lourde, en particulier des arbres, comprenant une partie de base (2) en forme de faucille avec une surface de base (6), une surface de couverture (7) et une surface latérale (3) concave délimitant un espace de réception (11) pour de la matière à couper sectionnée, qui est traversé par une plaque coupante (5), laquelle plaque coupante (5) est fixée de façon à reposer sur la surface de base (6) ou de couverture (7) sur la surface extérieure (12) de la surface de base ou de couverture par une première rangée de vis (8a) suivant au moins en partie une arête de bord (13) de la surface latérale (3) concave, **caractérisé en ce qu'**au moins la surface de base (6) ou la surface de couverture (7) à laquelle la plaque coupante (5) est fixée présente un contour extérieur (10) de forme convexe, et il est prévu une deuxième rangée de vis (8b) pour la fixation de la plaque coupante (5) qui suit au moins en partie le contour extérieur (10) convexe.

2. Dispositif selon la revendication 1, **caractérisé en ce que** la plaque coupante (5) se finit en affleurement avec le contour extérieur (10) convexe.

3. Dispositif selon la revendication 1 ou 2, **caractérisé en ce qu'**une douille filetée (14) est formée sur la partie de base (2) dans la partie d'extrémité de la partie de base (2) en forme de faucille pour au moins une des vis (4) de la première rangée de vis ou de la deuxième (8a, 8b).
